# EUROPEAN PATENT SPECIFICATION

(11) **EP 1 100 700 B1**
(45) Date of publication and mention of the grant of the patent: **27.11.2002**
(21) Application number: 99934881.6
(22) Date of filing: 19.07.1999
(51) Int. Cl.: B60R 13/08, G10K 11/168

(54) **HEAT SHIELDS**
HITZESCHILDE
BOUCLIERS THERMIQUES

(30) Priority: 25.07.1998 GB 9816203
(43) Date of publication of application: 23.05.2001
(73) Proprietor: Federal-Mogul Sealing Systems (Rochdale) Limited, Manchester M22 5TN (GB)
(72) Inventor: BRIDGE, David Richard, Rugby, Warwickshire CV22 5LD (GB)
(74) Representative: Drury, Peter Lawrence
(86) International application number: GB9902323
(87) International publication number: WO00006422

(56) References cited:
- EP-A- 0 439 432
- EP-A- 0 486 427
- EP-A- 0 557 597
- DE-A- 19 633 839
- US-A- 4 037 751

## Description

This invention is concerned with heat shields which are suitable for use in a vehicle.

Many vehicles contain significant sources of heat from which it is necessary to shield heat sensitive equipment, cargo, or passengers. For example, passengers in an automobile may need to be shielded from heat generated in an exhaust system, or electrical or electronic devices may need to be protected from heat generated in an engine.

Heat shields used in vehicles must combine good resistance to heat transfer with acceptable acoustic properties, ie they must not generate significant noise as the vehicle operates. It is also desirable that a heat shield is light, compact and can be readily re-cycled.

Some heat shields consist of a plurality of metal sheets arranged in a laminar assembly, the sheets comprising two outer covering sheets. One or both of the covering sheets are shaped to define a space between the covering sheets. The remaining sheets of the assembly extend in this space. Examples of this type of heat shield are disclosed in US 5011743 which shows the features of the preamble of Claim 1 (in which said remaining sheets are shaped by embossing to provide heat-insulating gaps), in GB 2269886 A (in which the remaining sheets are formed from smooth foil), GB 2270555 A (in which the remaining sheets are corrugated), GB 2271169 A (in which some of the remaining sheets are formed from expanded metal foil). Heat shields of this type present a continuous metal surface to the heat source to reflect the maximum amount of infra-red radiation. However, such heat shields are poor at absorbing sound.

A heat shield designed for absorbing sound is disclosed in DE 4137706 A. This heat shield has two metal covering sheets defining a space. One of the covering sheets has apertures to allow the passage of sound into said space. Said space contains solid material, such as quartz sand, which is retained in pockets formed between two sheets of foil which are joined together are microperforated, ie have holes of 0.3 to 1mm in diameter. However, this type of heat shield is complex to construct, is heavy, and, not being all-metal, is not readily re-cycled.

It is an object of the present invention to provide a heat shield suitable for use in a vehicle, the heat shield consisting of a plurality of metal sheets arranged in a laminar assembly, the heat shield having sound-absorbing properties and being light and also being capable of being readily re-cycled.

The invention provides a heat shield suitable for use in a vehicle, the heat shield consisting of a plurality of metal sheets arranged in a laminar assembly, the sheets comprising two outer covering sheets shaped to define a space between them in which space the remaining sheets of the assembly extend, characterised in that a first of said covering sheets defines apertures which allow sound to enter said space, and the second of said covering sheets presents a substantially continuous surface to said space, and in that said remaining sheets extending in said space comprise at least two sheets of microperforated metal foil, a first of said foil sheets extending adjacent to the apertured covering sheet, and the second of said foil sheets being shaped so that a plurality of voids is formed on both sides thereof.

A heat shield according to the invention has an all-metal construction, making it light and easy to re-cycle, and is easy to construct.

The microperforated foil sheets have perforations with a maximum dimension of 0.5 to 1mm. These microperforations may be circular, rectangular, or have any other suitable shape. Such microperforations may be formed by passing the foil between two rollers, one of which has perforation-forming projections thereon. The metal displaced to form the microperforations need not be entirely removed but instead may remain attached to edges of the microperforations. The microperforations may be arranged in an array, eg a rectilinear array or a hexagonal array. The spacing between adjacent microperforations may be 2 to 5mm.

The foil sheet can be shaped to form said voids by various methods, eg embossing or corrugating. Embossing or corrugation may be carried out in any convenient manner, including the use of an embossing roller or the multiple corrugation technique described in No GB-A-2316028. The resultant voids may be on the order of 1-5mm deep, though this will depend on the treatment used to form them.

In order to further increase the sound-absorbing properties of a heat shield according to the invention, said remaining sheets extending in said space may also comprise one or more further sheets of microperforated metal foil at least one of which is shaped so that a plurality of voids is formed on both sides thereof.

Said first covering sheet may have a thickness of 0.5mm to 1mm. Its apertures should be arranged so that it is essentially transparent to sound. The apertures in said first covering sheet may have a maximum dimension of about 5mm and a spacing of about 1 cm. The apertures may be circular, rectangular, or have any other suitable shape. The apertures may be arranged in an array, eg a rectilinear array or a hexagonal array.

The outer covering sheets are preferably joined together only around their marginal edges, so as to minimise the risk of compressing the voids. Joining may be, eg by clamping or sonic welding.

The microperforated metal foils may be of the order of 20 µm thick and provided with an overall pattern of perforations 0.5 - 1mm in diameter, spaced apart 2 - 5mm. A particularly preferred material for the microperforated foil is aluminium foil of the kind used in packing cigarettes, but without a paper backing. Such foil is typically on the order of 20 µm thick although this dimension is not crucial, except in that thinner foils may present handling problems and substantially thicker foils will diminish acoustic performance.

The apertured first covering sheet is preferably from 0.5 - 1mm thick and the second covering sheet may be 50-150 µm thick.

In a heat shield according to the invention, the sheets may be all formed from aluminium or an alloy thereof. The 1200 series of alloys are suitable.

In order that the invention may be better understood, a preferred embodiment of it will now be described by way of example with reference to the accompanying drawings, in which:
Figure 1 is a side view, in section, and on an enlarged, exaggerated scale for illustration purposes, of a heat shield in accordance with the invention; and
Figure 2 is a graph illustrating the acoustic properties of the heat shield of Figure 1 in comparison to other heat shield products.

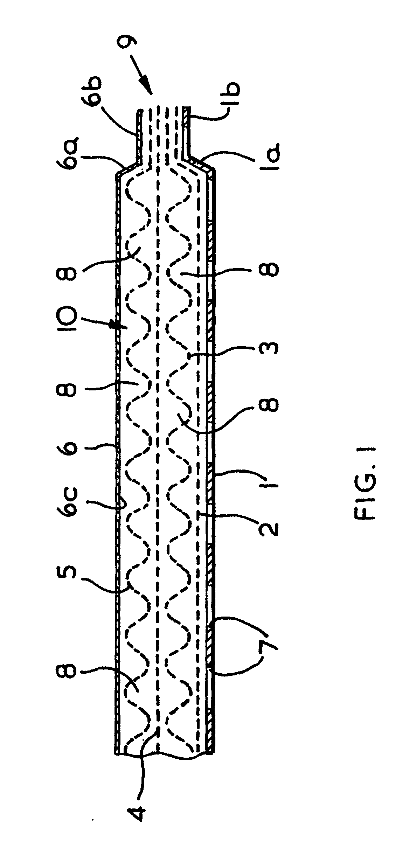

The illustrative heat shield shown in Figure 1 is suitable for use in a vehicle. Although the heat shield is shown in a flat condition, it can readily be bent into suitable shapes for enclosing or partially enclosing heat sources, eg parts of an exhaust system, or items to be protected.

The illustrative heat shield consists of a plurality of aluminium alloy sheets arranged in a laminar assembly. The sheets comprise two outer covering sheets 1 and 6 which are shaped to define a space 10 between them. Specifically, marginal portions 1a and 6a of the sheets 1 and 6 are turned towards one another to define the space 10 before turning outwardly to form parallel flanges 1b and 6b. The remaining sheets (to be described) of the laminar assembly extend in the space 10.

The bottom covering sheet 1 (viewing Figure 1) constitutes the main structural element of the heat shield and is intended to face towards a source of heat and noise. The sheet 1 is 0.5mm thick and defines apertures 7 which allow sound to enter said space 10. The apertures 7 are circular though-holes with a diameter of 5mm spaced in a rectilinear array with their centres 1cm apart. The apertures 7 make the sheet 1 effectively transparent to sound and portions of sheet 1 between the apertures 7 reflect infra-red radiation.

The top covering sheet 6 which is 125 microns thick presents a substantially continuous surface 6c to said space 10. The surface 6c reflects both sound and infra-red radiation back into the space 10.

The aforementioned remaining sheets of the illustrative heat shield, which extend in said space 10, comprise at least four sheets 2 to 5 of microperforated aluminium alloy foil. All of these four foil sheets are 20 microns thick and have an overall pattern of through-microperforations which are rectangular, each being 0.5mm by 1 mm, and are arranged in a rectilinear array with a 3mm spacing.

A first 2 of said foil sheets, which extends adjacent to the apertured covering sheet 1, is generally flat. The second 3 of said foil sheets overlies the sheet 2 and is shaped by corrugations so that a plurality of voids 8 is formed on both sides thereof. The corrugations are formed by rolling the foil between corrugated rollers. The third 4 of said foil sheets overlies the sheet 3 and is flat like the sheet 2. The fourth 5 of said foil sheets is between the sheets 4 and 6 and is similar to the sheet 3, ie it is shaped by corrugations so that a plurality of voids 8 is formed on both sides thereof.

The voids 8 which are 3mm deep act as sound absorbers and heat insulators.

The marginal edges 9 of the foil sheets 2 to 5 extend between the flanges 6a and 6b which are clamped together to join the sheets together, care being taken not to over compress the assembly and thereby destroy the voids 8.

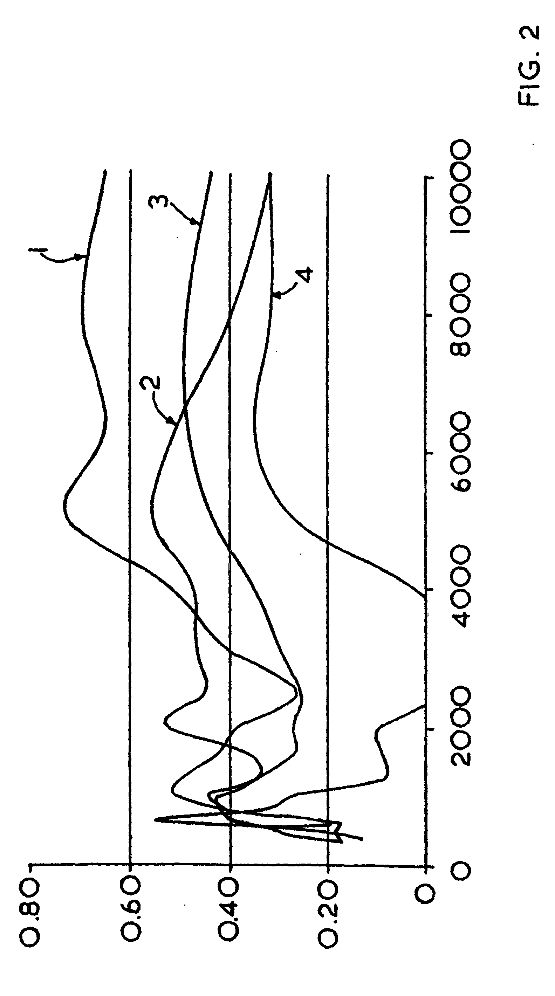

Referring now to Figure 2, the sound absorbence of the heat shield of Figure 1 was compared with that of three other heat shields and the results plotted on a graph. The respective axes of the graph show sound frequency in Hertz (x-axis) and coefficient of absorption, (y-axis on a scale of 0 to 0.8). The heat shield constructions tested were:-
1. the heat shield just described,
2. a generally similar heat shield filled with a knitted aluminium material,
3. as 1, but with plain foil (no micro perforations),
4, a plain metal heat shield - plain (unperforated) foils with no embossments.

The tests were carried out under identical conditions and it can be seen that the heat shield of this invention and as described in relation to Figure 1 has significantly better overall performance, especially at higher frequencies. It is noted that the pronounced dip in performance was attributable to resonances in the test assembly and is not necessarily a reflection of what would happen under normal use.

## Claims

1. A heat shield suitable for use in a vehicle, the heat shield consisting of a plurality of metal sheets arranged in a laminar assembly, the sheets comprising two outer covering sheets (1, 6) shaped to define a space (10) between them in which space the remaining sheets (2, 3) of the assembly extend, **characterised in that** a first (1) of said covering sheets defines apertures (7) which allow sound to enter said space (10), and the second (6) of said covering sheets presents a substantially continuous surface to said space (10), and **in that** said remaining sheets extending in said space (10) comprise at least two sheets (2, 3) of microperforated metal foil, a first (2) of said foil sheets extending adjacent to the apertured covering sheet (1), and the second (3) of said foil sheets being shaped so that a plurality of voids (8) is formed on both sides thereof.

2. A heat shield according to claim 1, **characterised in that** said remaining sheets extending in said space (10) also comprise one or more further sheets (4, 5) of microperforated metal foil, at least one (5) of which is shaped so that a plurality of voids (8) is formed on both sides thereof.

3. A heat shield according to either one of claims 1 and 2, **characterised in that** said voids (8) have a depth of 1 mm to 5mm.

4. A heat shield according to any one of claims 1 to 3, **characterised in that** said first covering sheet (1) has a thickness of 0.5mm to 1 mm.

5. A heat shield according to any one of claims 1 to 4, **characterised in that** the apertures (7) in said first covering sheet (1) have a maximum dimension of about 5mm and a spacing of about 1cm.

6. A heat shield according to any one of claims 1 to 5, **characterised in that** marginal edges (9) of the outer covering sheets (1, 2) are joined together.

7. A heat shield according to any one of claims 1 to 6, **characterised in that** the microperforated metal foils (2, 3, 4, 5) are of the order of 20 µm thick and provided with an overall pattern of perforations 0.5 - 1 mm in maximum dimension, spaced apart 2 - 5mm.

8. A heat shield according to any one of claims 1 to 7, **characterised in that** the sheets (1, 2, 3, 6) are all formed from aluminium or an alloy thereof.

## Patentansprüche

1. Hitze- bzw. Wärmeschild, der zur Verwendung in einem Fahrzeug geeignet ist, wobei der Hitzeschild aus einer Mehrzahl von Metallblechen bzw. -platten besteht, die in einer Lamellenanordnung bzw. lamellenartigen Anordnung angeordnet sind, wobei die Bleche zwei äußere Abdeckbleche (1, 6) aufweisen, die so gestaltet sind, um einen Raum (10) zwischen ihnen zu definieren, in welchem Raum sich die verbleibenden Bleche (2,3) der Anordnung erstrecken, **dadurch gekennzeichnet, dass** ein erstes (1) der Abdeckbleche Öffnungen (7) definiert, die es Schall erlauben, in den Raum (10) einzudringen, und das zweite (6) der Abdeckbleche eine im wesentlichen kontinuierliche Fläche für den Raum (10) ergibt, und dass die verbleibenden, sich in dem Raum (10) erstreckenden Bleche wenigstens zwei Bleche (2, 3) aus mikroperforierter Metallfolie aufweisen, wobei sich eine erste (2) der Blechfolien benachbart zu dem mit Öffnungen versehenen Abdeckblech (1) erstreckt und die zweite (3) der Blechfolien so ausgestaltet ist, dass an ihren beiden Seiten eine Mehrzahl von Hohlräumen (8) gebildet ist.

2. Hitzeschild nach Anspruch 1, **dadurch gekennzeichnet, dass** die verbleibenden, sich in dem Raum (10) erstreckenden Bleche ferner ein oder mehrere weitere Bleche (4, 5) aus mikroperforierter Metallfolie aufweisen, wobei wenigstens eine (5) von ihnen so ausgestaltet ist, dass an ihren beiden Seiten eine Mehrzahl von Hohlräumen (8) gebildet ist.

3. Hitzeschild nach einem von beiden Ansprüchen 1 und 2, **dadurch gekennzeichnet, dass** die Hohlräume (8) eine Tiefe von 1 mm bis 5 mm aufweisen.

4. Hitzeschild nach einem der Ansprüche 1 bis 3, **dadurch gekennzeichnet, dass** das erste Abdeckblech (1) eine Dicke von 0,5 mm bis 1 mm aufweist.

5. Hitzeschild nach einem der Ansprüche 1 bis 4, **dadurch gekennzeichnet, dass** die Öffnungen (7) in dem ersten Abdeckblech (1) eine Maximalabmessung von etwa 5 mm und eine Beabstandung von etwa 1 cm aufweisen.

6. Hitzeschild nach einem der Ansprüche 1 bis 5, **dadurch gekennzeichnet, dass** Begrenzungsränder (9) der äußeren Abdeckbleche (1, 2) miteinander verbunden sind.

7. Hitzeschild nach einem der Ansprüche 1 bis 6, **dadurch gekennzeichnet, dass** die mikroperforierten Metallfolien (2, 3, 4, 5) eine Dicke in der Größenordnung von 20 mm aufweisen und mit einem Gesamtmuster von Perforationen mit einer Maximalabmessung von 0,5 bis 1 mm versehen sind, die um 2 bis 5 mm beabstandet sind.

8. Hitzeschild nach einem der Ansprüche 1 bis 7, **dadurch gekennzeichnet, dass** die Bleche (1, 2, 3, 6) sämtlich aus Aluminium oder aus einer Legierung von diesem gebildet sind.

## Revendications

1. Bouclier thermique approprié pour utilisation dans un véhicule, le bouclier thermique étant constitué de plusieurs feuilles métalliques agencées en un ensemble stratifié, les feuilles comprenant deux feuilles extérieures (1, 6) de couverture formées pour définir, entre elles, un espace (10) dans lequel s'étendent les feuilles restantes (2, 3) de l'ensemble, **caractérisé en ce qu'**une première (1) desdites feuilles de couverture définit des ouvertures (7) qui permettent une entrée de son dans ledit espace (10), et la seconde (6) desdites feuilles de couverture présente une surface sensiblement continue audit espace (10), et **en ce que** lesdites feuilles restantes s'étendant dans ledit espace (10) comprennent au moins deux feuilles (2, 3) de plaque métallique microperforée, une première (2) desdites feuilles de plaque s'étendant adjacente à la feuille (1) de couverture munie d'ouvertures, et la deuxième (3) desdites feuilles de plaque étant formée de sorte que plusieurs cavités (8) sont formées sur chacun de ses côtés.

2. Bouclier thermique selon la revendication 1, **caractérisé en ce que** lesdites feuilles restantes s'étendant dans ledit espace (10) comprennent également une ou plusieurs feuilles supplémentaires (4, 5) de plaque métallique microperforée, dont au moins une (5) est formée de sorte que plusieurs cavités (8) sont formées sur chacun de ses côtés.

3. Bouclier thermique selon l'une ou l'autre des revendications 1 et 2, **caractérisé en ce que** lesdites cavités (8) ont une profondeur de 1 mm à 5 mm.

4. Bouclier thermique selon l'une quelconque des revendications 1 à 3, **caractérisé en ce que** ladite première feuille (1) de couverture a une épaisseur de 0,5 mm à 1 mm.

5. Bouclier thermique selon l'une quelconque des revendications 1 à 4, **caractérisé en ce que** les ouvertures (7) de ladite première feuille (1) de couverture ont une dimension maximale d'environ 5 mm et un pas d'environ 1 cm.

6. Bouclier thermique selon l'une quelconque des revendications 1 à 5, **caractérisé en ce que** les bords marginaux (9) des feuilles extérieures (1, 2) de couverture sont reliés les uns aux autres.

7. Bouclier thermique selon l'une quelconque des revendications 1 à 6, **caractérisé en ce que** les plaques métalliques microperforées (2, 3, 4, 5) ont une épaisseur de l'ordre de 20 µm et sont pourvues d'un motif d'ensemble de perforations de dimension maximale de 0,5 à 1 mm avec un pas de 2 à 5 mm.

8. Bouclier thermique selon l'une quelconque des revendications 1 à 7, **caractérisé en ce que** les feuilles (1, 2, 3, 6) sont toutes formées d'aluminium ou d'un alliage de celui-ci.
